# EUROPEAN PATENT APPLICATION

(11) **EP 4 750 155 A1**
(43) Date of publication of application: **27.05.2026**
(21) Application number: 24214803.9
(22) Date of filing: 22.11.2024
(51) Int. Cl.: H04W 36/14, B61L 15/00, H04W 72/12, H04W 88/06

(54) **WIRELESS COMMUNICATION APPARATUS AND METHOD FOR MISSION CRITICAL TRANSMISSION AND DELAY-TOLERANT TRANSMISSION**

(71) Applicant: Moxa Inc., 242032 New Taipei City (TW)
(72) Inventor: YANG, Shih-Sheng, 242032 NEW TAIPEI CITY (TW); WEI, Hung-Yu, 242032 NEW TAIPEI CITY (TW)
(74) Representative: Casalonga

(57) **Abstract**

A wireless communication apparatus is provided. The wireless communication apparatus includes a transceiver set and a processor electrically connected to the transceiver set. The transceiver set is configured to communicate with a first base station through a first channel. The processor is configured to: control the transceiver set to transmit and receive mission critical data with the first base station in a first communication mode; collect data other than the mission critical data from the first base station; control the transceiver set to transmit delay-tolerant data with the first base station in a second communication mode, wherein the delay-tolerant data comprises the collected data; and determine whether to switch the transceiver set to the second communication mode from the first communication mode according to the mission critical data.

## Description

### TECHNICAL FIELD

The present application relates to wireless communication apparatus and methods; in particular, to the wireless communication apparatus and methods for mission critical transmission and delay-tolerant transmission.

### BACKGROUND

Wireless transmission technology gradually evolves from 4G Long-Term Evolution (LTE) to 5G New Radio (NR). In 5G NR network, a key application scenario is ultra-reliable low-latency communication (URLLC) for ultra-low latency and high-reliability communication.

For example, communications-based train control (CBTC) is a high-speed mobile application in a signaling system that uses wireless communications between onboard and ground track equipment (or trackside equipment) for train operation and control, to achieve convenient and accurate traffic management. In the application of CBTC, high-speed trains need low-latency and highly reliable communication with ground track equipment to prevent accidents. However, wireless transmission on high-speed mobile trains is affected by multiple handover (HO) and radio link failure (RLF) events, resulting in decreased transmission quality. As a result, latency and packet loss are increased in data transmission.

Therefore, wireless communication apparatus and method with low latency and high reliability in CBTC are desired.

### SUMMARY OF THE INVENTION

The present application discloses a wireless communication apparatus. The wireless communication apparatus includes a transceiver set and a processor electrically connected to the transceiver set. The transceiver set is configured to communicate with a first base station through a first channel. The processor is configured to: control the transceiver set to transmit and receive mission critical data with the first base station in a first communication mode; collect data other than the mission critical data from the first base station; control the transceiver set to transmit delay-tolerant data with the first base station in a second communication mode, wherein the delay-tolerant data comprises the collected data; and determine whether to switch the transceiver set to the second communication mode from the first communication mode according to the mission critical data.

Furthermore, the present application discloses a wireless communication method. The wireless communication method includes: communicating with a first base station through a first channel; transmitting and receiving mission critical data with the first base station in a first communication mode; collecting data other than the mission critical data from the first base station; transmitting delay-tolerant data with the first base station in a second communication mode, wherein the delay-tolerant data comprises the collected data; and determining whether to switch to the second communication mode from the first communication mode according to the mission critical data..

### BRIEF DESCRIPTION OF THE DRAWINGS

Aspects of the present disclosure are best understood from the following detailed description when read with the accompanying drawings. It is noted that, in accordance with the common practice in the industry, various features are not drawn to scale. In fact, the dimensions of various features may be arbitrarily increased or reduced for clarity of discussion.
FIG. 1 is a wireless communication apparatus, in accordance with some embodiments of the present disclosure.
FIG. 2 shows a diagram illustrating the input features sequence and the prediction range corresponding to the collected data, in accordance with some embodiments of the present disclosure.
FIG. 3 shows a deployment scenario for the wireless communication apparatus of FIG. 1, in accordance with some embodiments of the present disclosure.
FIG. 4 is a diagram illustrating an example procedure between the wireless communication apparatus, the CBTC server and the ML training host, in accordance with some embodiments of the present disclosure.
FIG. 5 is a diagram illustrating the procedures in the wireless communication apparatus and the ML training host between the data upload task and the model retrieval task of FIG. 4, in accordance with some embodiments of the present disclosure.
FIG. 6 is a wireless communication method performed by a wireless communication apparatus on a vehicle, in accordance with some embodiments of the present disclosure.
FIGS. 7A and 7B show the scenarios illustrating switching policies of the CBTC task and the data upload task, in accordance with some embodiments of the present disclosure.

### DETAILED DESCRIPTION

Some variations of the embodiments are described. Throughout the various views and illustrative embodiments, like reference numbers are used to designate like elements. It should be understood that additional operations can be provided before, during, and/or after a disclosed method, and some of the operations described can be replaced or eliminated for other embodiments of the method.

The disclosure provides a wireless communication apparatus and a wireless communication method for mission critical transmission and delay-tolerant transmission to avoid high latency and packet loss in network of high-speed environment (e.g., communications-based train control (CBTC)). The apparatus and method use techniques including a technique of machine learning (ML). According to the embodiments, the present disclosure is suitable for being used in a vehicle within which a wireless communication apparatus may perform wireless module configuration for the mission critical transmission and the delay-tolerant transmission. The mission critical transmission requires extremely high reliability to handle various emergencies on vehicle. The delay-tolerant transmission requires to ensure good throughput so that monitoring data can be returned smoothly for analysis.

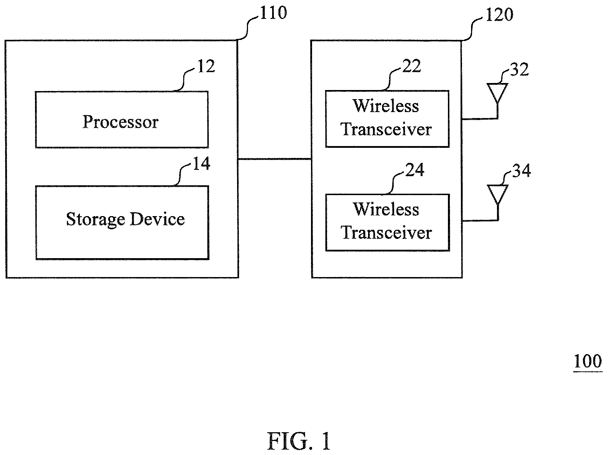

FIG. 1 is a wireless communication apparatus 100, in accordance with some embodiments of the present disclosure. The wireless communication apparatus 100 includes a control node 110, a transceiver set 120 and two antenna modules 32 and 34. In the embodiment of FIG. 1, the transceiver set 120 includes the wireless transceivers 22 and 24, and the wireless transceivers 22 and 24 are coupled to the antenna modules 32 and 34, respectively. In some embodiments, the transceiver set 120 includes one or more wireless transceivers and one or more antenna modules. The number of wireless transceivers and the number of antenna modules are merely an example and are not intended to be limiting the disclosure.

Each of the antenna modules 32 and 34 includes a single antenna or an antenna array. The antenna modules 32 and 34 may have the same or different antenna configurations. In some embodiments, the antenna modules 32 and 34 may include the single antennas having omni-directional radiation patterns, and the single antennas are capable of communicating with different base stations. In some embodiments, the antenna module 32 or 34 may include an antenna array, and the antennas of the antenna array are capable of communicating with at least two base stations.

Each of the wireless transceivers 22 and 24 includes one or multiple integrated transmitters (not shown) and receivers (not shown), or one or more sets of separate transmitter and separate receiver. In general, the receiver is capable of down-converting a received radio frequency (RF) signal or a microwave signal into a baseband frequency, and the transmitter is capable of up-converting a received baseband signal into an RF signal or a microwave frequency. Furthermore, each of the wireless transceivers 22 and 24 is coupled to the control node 110 through a fiber, wireless or wired connection.

The wireless transceiver 22 and the antenna module 32 may form a first RF interface, and the wireless transceiver 24 and the antenna module 34 may form a second RF interface. In some embodiments, the first and second RF interfaces are arranged at the same locations. In some embodiments, the first and second RF interfaces are arranged at different locations. For example, the wireless communication apparatus 100 is set on a train, and the first RF interface is disposed at a front of a train carriage and the second RF interface is disposed at a middle of the train carriage or other train carriage.

The control node 110 includes a processor 12 and a storage device 14. The processor 12 is electrically connected to the transceiver set 120, and is configured to control the transceiver set 120 to establish communication links with two base stations according to different band settings. The processor 12 may be a central processing unit (CPU), a microprocessor, a microcontroller, a field programmable gate array (FPGA) unit, a graphics programming unit (GPU), a custom-made integrated circuit (IC) and so on.

In some embodiments, the processor 12 is configured to control the transceiver set 120 to communicate with the two base stations with the same generation or different generations of communication technologies. For example, the base stations may be evolved Node-Bs (eNBs) of 3GPP Long-Term Evolution (LTE) networks or gNodeBs (gNBs) of 5G New Radio (NR). The base station may also be referred to as an access point, an access terminal, a base unit or by other terminology used in the art. It should be noted that while the inventive concept is described in terms of 4G and 5G communication protocols or base stations, the disclosure is not limited to 4G and 5G communication systems and may extend beyond.

In some embodiments, each of the wireless transceivers 22 and 24 may support a 3GPP cellular wireless communication standard, such as 4G, 5G, 6G and so on. The wireless transceivers 22 and 24 may support the same or different radio access technologies. Moreover, the processor 12 is configured to control the wireless transceivers 22 and 24 to use different sets of radio frequencies. For example, the wireless transceiver 22 is controlled to use a first set of frequencies, and the wireless transceiver 24 is controlled to use a second set of frequencies that is different from the first set of frequencies.

In some embodiments, the processor 12 is configured to control the wireless transceivers 22 and 24 to use LTE/5G dual mode, e.g., non-stand-alone 5G or stand-alone dual mode LTE/5G. For example, the wireless transceiver 22 is controlled to use only LTE, and the wireless transceiver 24 is controlled to use only stand-alone 5G. Alternatively, the wireless transceiver 22 is controlled to use only LTE, and the wireless transceiver 24 is controlled to use both LTE and 5G capabilities.

The processor 12 is configured to control the operations of the transceiver set 120 according to the program instructions and data stored in the storage device 14. In some embodiments, the storage device 14 is a memory. The storage device 14 is further configured to store dataset for a prediction model (e.g., HO prediction model) and band configuration and determining conditions for a policy control model. The prediction model and the policy control model are performed by the processor 12 or implemented in the processor 12. The dataset includes data about HO/ Radio Link Failure (RLF) and signal strength. In some embodiments, the wireless communication apparatus 100 is disposed on a vehicle, and the vehicle travels on a fixed or known route. For example, the vehicle is a train or a metro that moves along an orbital path. The collected data may include packet information and signaling messages between the wireless communication apparatus 100 and the base stations collected along the orbital path when the wireless communication apparatus 100 transmits packets with consistent throughput to the base stations. The wireless communication apparatus 100 is configured to perform model inference and actions for dynamic network configurations. Furthermore, the collected data is stored in the storage device 14.

By analyzing the collected data, the HO types are identified and categorized by using the prediction model. In some embodiments, a HO triggering mechanism is provided based upon relative measurement results, e.g. it can be configured to trigger when the signal quality measurement of a neighbor cell is stronger than the signal quality measurement of a special cell. The signal quality measurements may include Reference Signal Received Power (RSRP), Reference Signal Received Quality (RSRQ) or Signal to Interference Noise Ratio (SINR).

The collected data includes the information regarding signal strength (e.g., the signal quality measurements) during specific time intervals and occurrences of certain types of HO events or critical events. In some embodiments, according to the collected data, the processor 12 is configured to use the prediction model for prediction of HO events, so as to determine whether to change band configurations of the transceiver set 120 to prevent multiple HO events, thereby decreasing latency and packet loss caused by multiple HO events. Furthermore, according to the collected data, the processor 12 is configured to use the prediction model to predict RLF event, selection of radio technologies (e.g., LTE, 5G NR, 6G, etc.), frequency configurations (e.g., bank locking, carrier aggregation configuration, or dual-connectivity configuration).

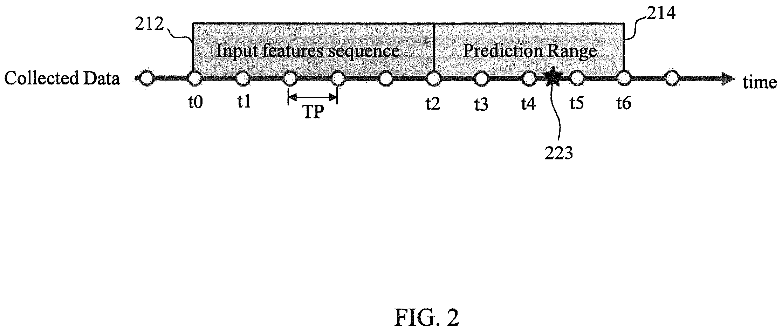

FIG. 2 shows a diagram illustrating the input features sequence and the prediction range corresponding to the collected data, in accordance with some embodiments of the present disclosure. In FIG. 2, the collected data represents the data scene from time t0 to time t6. In some embodiments, the time difference between two adjacent time points (e.g., time t1 and time t0) is a time interval TP (e.g., 1 second).

The collected data is fed into the prediction model (or other pre-trained models) as input features for prediction. In response to the input features sequence, the prediction range is generated for each collected data, so as to predict whether a HO or RLF event will occur with classification algorithms in the HO prediction model and to predict how much time remained until the HO or RLF event with regression algorithms in the HO prediction model. For example, the prediction range 214 between time t2 and time t6 is generated according to the input features sequence 212 obtained from time t0 through time t2 for the collected data. In the embodiment of FIG. 2, a HO event 223 is predicted to occur within the prediction range 214 and between time t4 and time t5 according to the input features sequence 212.

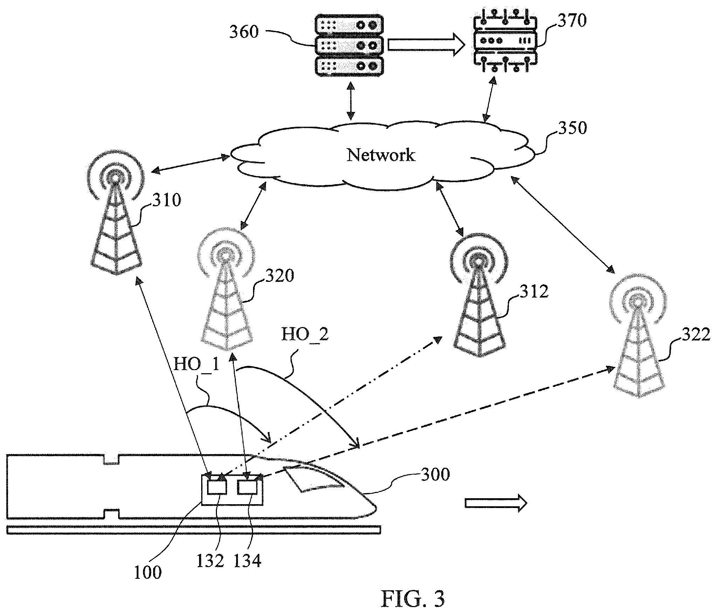

FIG. 3 shows a deployment scenario for the wireless communication apparatus 100 of FIG. 1, in accordance with some embodiments of the present disclosure. In the embodiment of FIG. 3, the wireless communication apparatus 100 is disposed in a moving train 300. Furthermore, a first RF interface 132 including the wireless transceiver 22 and the antenna module 32 of FIG. 1 is configured to communicate with the base station 310 with a first band setting. A second RF interface 134 including the wireless transceiver 24 and the antenna module 34 of FIG. 1 is configured to communicate with the base station 320 with a second band setting. The first band setting is different from the second band setting. The first RF interface 132 and the second RF interface 134 may be disposed in the same or different locations in the train 300. In some embodiments, multiple wireless communication apparatuses 100 are disposed in the train 300. For example, one wireless communication apparatus 100 is disposed at the front of the train 300, and another wireless communication apparatus 100 is disposed at the rear of the train 300.

In some embodiments, as the train 300 moves, HO procedures are performed between the base stations along a route of the train 300. For example, when the train 300 moves away from a coverage range of the base station 310 into a coverage range of the base station 312, a HO procedure HO_1 is performed for the first RF interface 132. Similarly, when the train 300 moves away from a coverage range of the base station 320 into a coverage range of the base station 322, a HO procedure HO_2 is performed for the second RF interface 134.

When the train 300 moves, the wireless communication apparatus 100 is configured to establish the CBTC communication with a CBTC server 360 through the corresponding base station and a network 350, so as to collect and transmit information of the position, speed and direction of the train 300 for controlling the movement of the train 300. In some embodiments, the network 350 includes a backbone network and/or a wireless network of a CBTC system. The backbone network serves as the transmission channel between ground-based railway equipment, such as switches that guide trains onto different tracks, signals that provide instructions to drivers or dispatchers, and track circuits that detect obstacles on the tracks. Furthermore, the wireless network is configured to perform data exchange between the wireless communication apparatus 100 and the backbone network through the corresponding base station. For example, when the train 300 moves within the coverage area of the base station 310, the wireless communication apparatus 100 is configured to use the first RF interface 132 to establish the CBTC communication with the CBTC server 360 through the base station 310 and the network 350. Through the CBTC communication, the CBTC server 360 is capable of performing Automatic Train Protection (ATP), Automatic Train Operation (ATO), and Automatic Train Supervision (ATS) on the train 300.

In FIG. 3, the wireless communication apparatus 100 is configured to receive the CBTC signals from the CBTC server 360 and transmit the CBTC signals to the CBTC server 360. The CBTC signals are mission critical data in a mission critical application. In some embodiments, the mission critical application might have requirements on the data delivery successful ratio (e.g., with high reliability), delivery within a delay bound (e.g., delay sensitive application), and the probability of successful delivery with a delay bound. In some embodiments, the probability of successful delivery is greater than a threshold value p_threshold, such as Probability(delay<t_threshold) > p_threshold, where t_threshold represents a specific time. e.g., 100ms, or in an ultra-reliable low-latency communication (URLLC) traffic.

The wireless communication apparatus 100 is further configured to collect data that including packet information and signal information with the corresponding base station, and provide the collected data to the CBTC server 360. After receiving the collected data, the CBTC server 360 is configured to provide the collected data to a ML training host 370. According to the collected data, the ML training host 370 is configured to train the prediction model and/or policy control model to be used in the wireless communication apparatus 100, so that the trained models can be more accurate. In response to a request from the wireless communication apparatus 100, the ML training host 370 is configured to provide the latest trained model to the wireless communication apparatus 100. The CBTC server 360 is connected to the ML training host 370 in a wired or wireless manner. In some embodiments, the CBTC server 360 and the ML training host 370 are implemented in a CBTC control center.

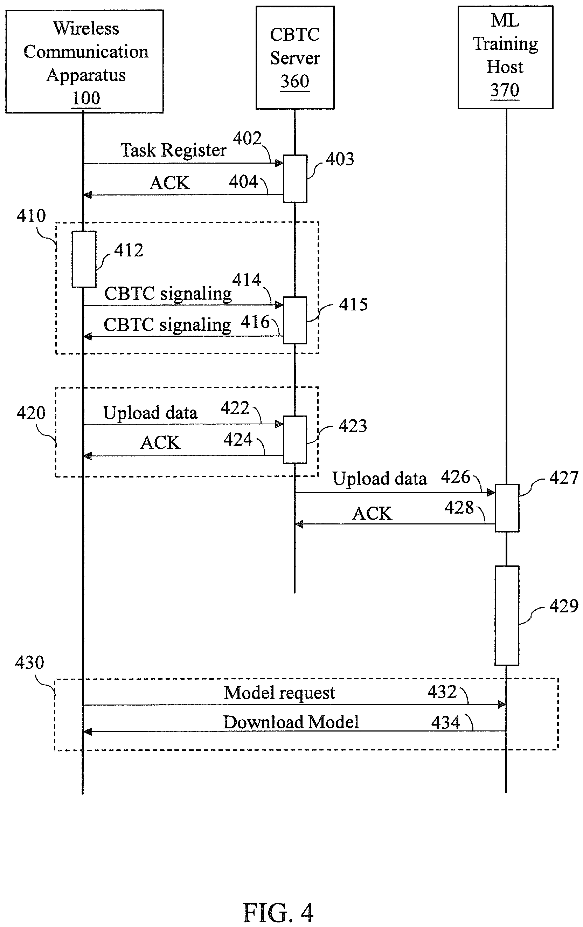

FIG. 4 is a diagram illustrating an example procedure between the wireless communication apparatus 100, the CBTC server 360 and the ML training host 370, in accordance with some embodiments of the present disclosure. Initially, the wireless communication apparatus 100 is configured to provide a task register request 402 to the CBTC server 360. In response to the task register request 402, the CBTC server 360 is configured to perform a register operation 403 to register the execution times for various tasks (such as CBTC tasks and data upload tasks) in a task scheduler. These tasks are then executed according to the registered schedule. After the register operation 403 is completed, the CBTC server 360 is configured to provide an acknowledgement (ACK) 404 to the wireless communication apparatus 100. In some embodiments, start timers and stop timers are created for each task, and the runtime of each task is controllable, that allowing for task switching.

After receiving the ACK 404, the wireless communication apparatus 100 is configured to perform a CBTC task 410. In the CBTC task 410, the wireless communication apparatus 100 is configured to perform the prediction operation 412, so as to perform model inference and actions for dynamic network configurations with the base stations when the train 300 is moving. According to the results of the prediction operation 412, the wireless communication apparatus 100 is configured to provide the CBTC signaling 414 including the operation information of the train 300 to the CBTC server 360. The CBTC signaling 414 includes mission critical data in a wireless communication. According to the CBTC signaling 414, the CBTC server 360 is configured to perform a control operation 415 for the train 300 and provide the CBTC signaling 416 including the results of the control operation 415 to the wireless communication apparatus 100. In response to the CBTC signaling 416, the wireless communication apparatus 100 is configured to control the operation of the train 300, such as speed and so on. The CBTC task 410 is executed repeatedly until the registered execution time is reached.

After the CBTC task 410 is completed, a data upload task 420 is performed. It should be noted that the reliability of the CBTC task 410 is importation, so it is necessary to ensure that the data upload task 420 will not interfere with the CBTC task 410.

In the data upload task 420, the wireless communication apparatus 100 is configured to upload data 422 to the CBTC server 360, and the uploaded data 422 includes the collected data stored in the storage device 14, i.e., the delay-tolerant data in a wireless communication other than the mission critical data. As describe above, the collected data may include packet information and signaling messages between the wireless communication apparatus 100 and the base stations collected along the orbital path when the wireless communication apparatus 100 transmits packets with consistent throughput to the base stations, and the corresponding signal quality measurements. After obtaining the uploaded data 422, the CBTC server 360 is configured to perform an operation 423 to store the uploaded data 422 and provide the ACK 424 to the wireless communication apparatus 100 when the uploaded data 422 is received completely. Next, the CBTC server 360 is configured to provide the uploaded data 426 to the ML training host 370. After obtaining the uploaded data 426, the ML training host 370 is configured to perform an operation 427 to store the uploaded data 426 and provide the ACK 428 to the CBTC server 360 when the uploaded data 426 is received completely. After obtaining the uploaded data 426 including the collected data collected by the wireless communication apparatus 100, the ML training host 370 is configured to perform the training operation 429 for the models used in the wireless communication apparatus 100.

In some embodiments, the data upload task 420 is periodically performed by the wireless communication apparatus 100 according to a first time interval, such as every day or every fixed number of days. Furthermore, the wireless communication apparatus 100 is further configured to periodically perform a model retrieval task 430 with the ML training host 370 according to a second time interval, and the second time interval is longer than the first time interval. For example, while the data upload task 420 is performed once a day, the model retrieval task 430 may be performed once a week. In the model retrieval task 430, the wireless communication apparatus 100 is configured to provide a model request 432 to the ML training host 370 without through the CBTC server 360. In response to the model request 432, the ML training host 370 is configured to provide the latest trained model 434 to the wireless communication apparatus 100. Next, the wireless communication apparatus 100 is configured to update the corresponding models according to the obtained latest trained model 434.

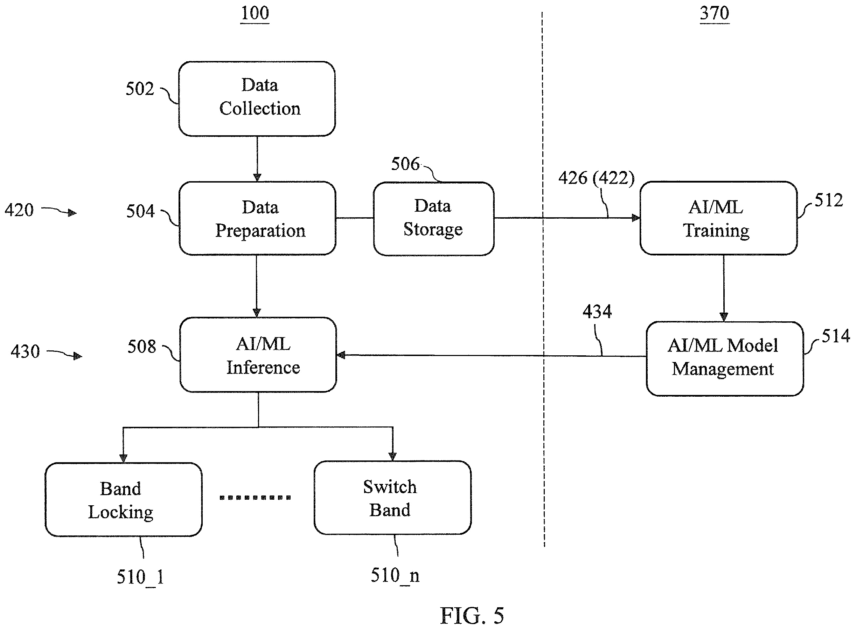

FIG. 5 is a diagram illustrating the procedures in the wireless communication apparatus 100 and the ML training host 370 between the data upload task 420 and the model retrieval task 430 of FIG. 4, in accordance with some embodiments of the present disclosure. In the wireless communication apparatus 100, the collected data is obtained in procedure 502, and the collected data will be used to train the models, e.g., the uploaded data 422/426 of FIG. 4) is prepared in procedure 504 and then is stored as the uploaded data (e.g., the uploaded data 422 of FIG. 4) in procedure 506 for transmission to the ML training host 370 in the data upload task 420. Simultaneously, the collected data is fed into the prediction model for AI/ML inference in procedure 508 so as to perform the corresponding actions in procedures 510_1 through 510_n for dynamic network configurations. In procedure 508, the AI/ML inference may be delay sensitive and the execution time may be time sensitive. The procedures 510_1 through 510_n include the technique of band locking, band switching and so on.

The technique of band locking involves applying a setting by the wireless communication apparatus or by the user so that each wireless interface of the wireless communication apparatus is configured to only connect to a subset of predetermined frequency bands and are forbidden to be connected to the rest of available frequency bands provided by a base station. By performing the technique of band locking, the number of candidate channels of the base station to be considered could be reduced so as to avoid executing unnecessary HO procedures.

In the ML training host 370 of FIG. 5, the models are trained according to the uploaded data 426 in procedure 512. Next, in procedure 514, the trained models are stored and managed, so as to provide the latest model to the wireless communication apparatus 100 in response to the model request 432 from the wireless communication apparatus 100. Thus, the prediction model for AI/ML inference in procedure 508 is updated according to the latest model 434 from the ML training host 370.

The technique of ML of AI is capable of automatically learning from data and past experiences to identify features and make predictions, which focuses on the use of data and algorithms to imitate the way that humans learn, gradually improving its accuracy. For example, through the use of statistical methods, algorithms are trained to make classifications or predictions, and to uncover key insights in data mining projects. The techniques could be especially helpful.

Such techniques could be especially helpful when the user is situated within a fast-moving train, and wireless communication apparatus has to undergo HOs very frequently. Thus, by performing these techniques, abnormal performances is minimized by avoiding the overlaps of HO periods among different wireless interfaces.

In some embodiments, the prediction model of the disclosure may be trained first according to a plurality of training data sets. In some embodiments, each training data set includes an input training data (e.g., RSRPs during a time interval) and an output training data (e.g., an actual HO timing), and then the training data sets are collected. For example, in a HO prediction model, the training data sets are utilized to train the HO prediction model by using a two-stage prediction approach for predicting HO events. In a first-stage prediction, the training data sets are used to train the HO prediction model to predict whether the HO event will occur. In a second-stage prediction, the training data sets are used to train the HO prediction model to predict the time of HO event occurrence.

In some embodiments, the prediction model is established based on the known ML models, such as support vector machine (SVM) model, recurrent neural network (RNN) model, extreme gradient boosting (XGB) model, gradient boosting (GB) model or other algorithm that shall be appreciated by those skilled in the art based on the above disclosure, and thus will not be further described herein.

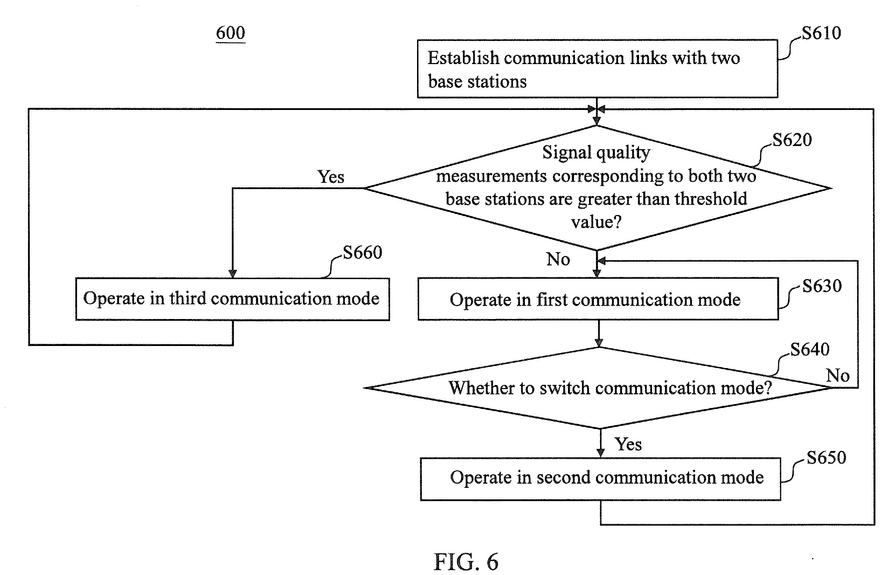

FIG. 6 is a wireless communication method 600 performed by a wireless communication apparatus (e.g., 100 of FIG. 1) on a vehicle (e.g., 300 of FIG. 3), in accordance with some embodiments of the present disclosure. The vehicle travels on the fixed or known routes. For convenience of explanation, the method of FIG. 6 will be explained in conjunction with FIGS. 3 and 4.

The wireless communication method is implemented in a railway signaling system for CBTC that uses telecommunications between the train and ground track equipment for traffic management and infrastructure control. CBTC allows a train's position to be known more accurately than with traditional signaling systems. This makes railway traffic management safer and more efficient. Metros (and other railway systems) are able to reduce headways while maintaining or even improving safety.

In operation S610, the wireless communication apparatus 100 is configured to simultaneously establish communication links with two base stations according to different band settings. For example, in the wireless communication apparatus 100, the first RF interface 132 is configured to communicate with the base station 310 through a first channel according to a first band setting, and the second RF interface 134 is configured to communicate with the base station 320 through a second channel according to a second band setting. Through the communication links, the wireless communication apparatus 100 is configured to transmit the same or different packets to the base stations 310 and 320.

In operation S620, it is determine whether both the signal quality measurements (e.g., RSRP, RSRQ or SINR) corresponding to the base stations 310 and 320 are greater than a threshold value. If one of the signal quality measurements corresponding to the base stations 310 and 320 is less than the threshold value, e.g., the radio condition of the first RF interface 132 or the second RF interface 134 has low reliability, the flow enters operation S630.

In operation S630, a first communication mode is performed to transmit the mission critical data (e.g., the CBTC signaling of CBTC task 410) through both the first RF interface 132 and the second RF interface 134. For example, the wireless communication apparatus 100 is configured to transmit the same packets to the base stations 310 and 320 for the CBTC task 410. In some embodiments, the first communication mode is performed through the RF interface having the higher reliability among the first RF interface 132 and the second RF interface 134.

In operation S640, it is determined whether to switch to a second communication mode according to the CBTC signaling, the signal quality measurement or a vehicle schedule of the train 300. For example, if the signal quality measurements of both the first RF interface 132 and the second RF interface 134 are less that the threshold value, the wireless communication apparatus 100 is configured to continue operating in the first communication mode, and the flow returns to operation S630. In some embodiments, if the CBTC signaling indicates that the CBTC tasks 410 are completed according to the registered schedule or the CBTC signaling, or if the vehicle schedule indicates that the train 300 is static, for example, the train 300 stays at a station for more than a specific time or the train 300 stops in the parking garage after operational hour (or running time), then the wireless communication apparatus 100 is configured to switch to the second communication mode from the first communication mode, and the flow enters operation S650.

In operation S650, the second communication mode is performed to transmit the delay-tolerant data (e.g., the uploaded data of the data upload task 420) through both the first RF interface 132 and the second RF interface 134. For example, the wireless communication apparatus 100 is configured to transmit the same packets to the base stations 310 and 320 for the data upload task 420. In some embodiments, the first communication mode is performed through the RF interface having the higher reliability among the first RF interface 132 and the second RF interface 134. After transmitting the delay-tolerant data is completed, the flow returns to operation S620.

In operation S620, if it is determined that both the signal quality measurements corresponding to the base stations 310 and 320 are greater than the threshold value, the flow enters operation S660.

In operation S660, a third communication mode is performed to transmit the mission critical data (e.g., the CBTC signaling of CBTC task 410) through one of the first RF interface 132 and the second RF interface 134 and transmit the delay-tolerant data (e.g., the uploaded data of the data upload task 420) through the other RF interface. For example, the wireless communication apparatus 100 is configured to transmit the different packets to the base stations 310 and 320 for the CBTC task 410 and the data upload task 420, respectively.

According to the method 600 of FIG. 6, the transmission of the mission critical data that requires high reliability and the transmission of the delay-tolerant data that requires a large amount of bandwidth will not be executed at the same time for a single RF interface, thereby avoiding interference between the CBTC task 410 and the data upload task 420.

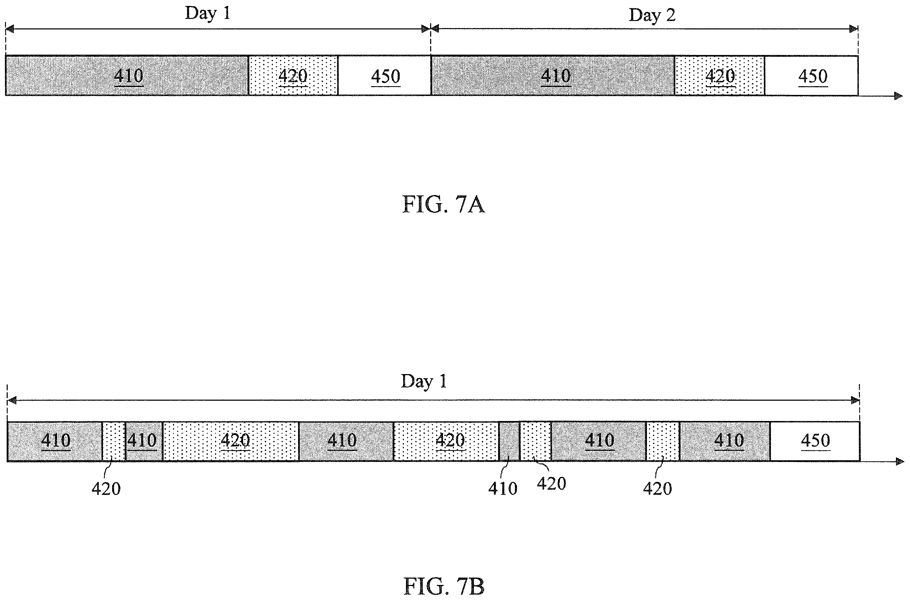

FIGS. 7A and 7B show the scenarios illustrating switching policies of the CBTC task 410 (i.e., the first communication mode) and the data upload task 420 (i.e., the second communication mode), in accordance with some embodiments of the present disclosure.

In FIGS 7A and 7B, the CBTC task 410 and the data upload task 420 are performed through the same RF interface. For example, when it is determined that one of the signal quality measurements corresponding to the base stations 310 and 320 is less than the threshold value in operation S620, the CBTC task 410 and the data upload task 420 are performed through both the first RF interface 132 and the second RF interface 134 or the RF interface having the higher reliability.

In FIG. 7A, every day when the train 300 is activated (i.e., not in the power-off state 450), the CBTC task 410 is performed during a passenger service period ranging from 10 to 18 hours, and the data upload task 420 is performed during the maintenance period, thereby preventing the CBTC task 410 and the data upload task 420 from interfering with each other.

In FIG. 7B, when the train 300 is activated (i.e., not in the power-off state 450), the CBTC task 410 and the data upload task 420 are performed during the passenger service period. However, only one of the CBTC task 410 and the data upload task 420 is performed at any given time, and the CBTC task has a higher priority than the data upload task 420, thereby preventing the CBTC task 410 and the data upload task 420 from interfering with each other. Furthermore, since the data upload task 420 is performed during the passenger service period, the real-time network status can be monitored. Therefore, if the network environment changes significantly, the uploaded data can be used to immediately train the model for subsequent updates. In some embodiments, the CBTC task 410 and the data upload task 420 are dynamically configured for execution according to radio resources, mission critical application traffic pattern, mission critical application data delivery requirement, and so on. For example, when there are spare radio resources available for transmission, more data upload tasks 420 are performed, i.e., the delay-tolerant data is transmitted between two mission-critical transmissions of the CBTC task 410.

Although the preferred embodiments of the present disclosure have been described above, they are not used to limit the present disclosure, and a person having ordinary skill in the art will be able to make certain changes and modifications without departing from the spirit and scope of the disclosure, and thus, the protection scope of the present disclosure is defined by the annexed claims.

## Claims

1. A wireless communication apparatus, **characterized by** comprising:
a transceiver set (120) configured to communicate with a first base station (310) through a first channel; and
a processor (12) electrically connected to the transceiver set, and configured to:
control the transceiver set to transmit and receive mission critical data with the first base station in a first communication mode;
collect data other than the mission critical data from the first base station;
control the transceiver set to transmit delay-tolerant data with the first base station in a second communication mode, wherein the delay-tolerant data comprises the collected data; and
determine whether to control the transceiver set to switch to the second communication mode from the first communication mode according to the mission critical data.

2. The wireless communication apparatus of claim 1, **characterized in that** the processor is further configured to:
determine whether to control the transceiver set to handover to a second base station using a prediction model according to the collected data; or
determine whether to control the transceiver set to communicate with the first base station through a second channel using the prediction model according to the collected data.

3. The wireless communication apparatus of claim 2, **characterized in that** the processor is further configured to:
update the prediction model according to a new model from a training host,
wherein the training host is configured to train the new model according to the delay-tolerant data from the first base station.

4. The wireless communication apparatus of any of claims 1-3, **characterized in that** the wireless communication apparatus is disposed on a vehicle, and the mission critical data comprises communications-based train control, CBTC, signaling for the vehicle.

5. The wireless communication apparatus of claim 4, **characterized in that** the processor is configured to:
switch the transceiver set to the second communication mode from the first communication mode when the vehicle is static; and
determine whether the vehicle is static according to the mission critical data or a vehicle schedule.

6. The wireless communication apparatus of any of claims 1-5, **characterized in that** the transceiver set is further configured to communicate with a second base station (320) through a second channel, wherein the processor is configured to:
control the transceiver set to transmit and receive the mission critical data with the first base station and to transmit the delay-tolerant data with the second base station in a third communication mode.

7. The wireless communication apparatus of claim 6, **characterized in that** a first signal quality measurement corresponding to the first base station and a second signal quality measurement corresponding to the second base station are greater than a threshold value in the third communication mode.

8. The wireless communication apparatus of claim 7, **characterized in that** the first signal quality measurement is greater than the threshold value and the second signal quality measurement is less than the threshold value in the first and second communication modes, and the delay-tolerant data comprises the first signal quality measurement and the second signal quality measurement.

9. A wireless communication method, **characterized by** comprising:
communicating with a first base station (310) through a first channel;
transmitting and receiving mission critical data with the first base station in a first communication mode;
collecting data other than the mission critical data from the first base station;
transmitting delay-tolerant data with the first base station in a second communication mode, wherein the delay-tolerant data comprises the collected data; and
determining whether to switch to the second communication mode from the first communication mode according to the mission critical data.

10. The wireless communication method of claim 9, **characterized by** further comprising:
determining whether to handover to a second base station using a prediction model according to the collected data; or
determining whether to communicate with the first base station through a second channel using the prediction model according to the collected data.

11. The wireless communication method of claim 10, **characterized by** further comprising:
updating the prediction model according to a new model from a training host,
wherein the training host is configured to train the new model according to the delay-tolerant data from the first base station.

12. The wireless communication method of any of claims 9-11, **characterized in that** the mission critical data comprises communications-based train control, CBTC, signaling for a vehicle.

13. The wireless communication method of claim 12, **characterized in that** determining whether to switch to the second communication mode from the first communication mode according to the mission critical data further comprises:
determining whether the vehicle is static according to the mission critical data or a vehicle schedule; and
switching to the second communication mode from the first communication mode when the vehicle is static.

14. The wireless communication method of any of claims 9-13, **characterized by** further comprising:
communicating with a second base station (320) through a second channel; and
transmitting and receive the mission critical data with the first base station and transmitting the delay-tolerant data with the second base station in a third communication mode.

15. The wireless communication method of claim 14, **characterized in that** a first signal quality measurement corresponding to the first base station and a second signal quality measurement corresponding to the second base station are greater than a threshold value in the third communication mode, and the first signal quality measurement is greater than the threshold value and the second signal quality measurement is less than the threshold value in the first and second communication modes.

## Amended claims

### Amended claims in accordance with Rule 137(2) EPC.

1. A wireless communication apparatus, comprising:
a transceiver set (120) configured to communicate with a first base station (310) through a first channel and a second base station (320) through a second channel; and
a processor (12) electrically connected to the transceiver set, and configured to:
control the transceiver set to operate in a first communication mode to transmit and receive mission critical data with the first base station;
collect data other than the mission critical data from the first base station;
control the transceiver set to operate in a second communication mode to transmit delay-tolerant data with the first base station, wherein the delay-tolerant data comprises the collected data;
determine whether to control the transceiver set to switch to the second communication mode from the first communication mode when the mission critical data indicates that a task is completed;
control the transceiver set to transmit and receive the mission critical data with the first base station, and to transmit the delay-tolerant data with the second base station in a third communication mode; and **characterized by**
selectively control the transceiver to operate in one of the first communication mode, the second communication mode, or the third communication mode according to a first signal quality measurement corresponding to the first base station and a second signal quality measurement corresponding to the second base station.

2. The wireless communication apparatus of claim 1, **characterized in that** the processor is further configured to:
determine whether to control the transceiver set to handover to a second base station using a prediction model according to the collected data; or
determine whether to control the transceiver set to communicate with the first base station through a second channel using the prediction model according to the collected data.

3. The wireless communication apparatus of claim 2, **characterized in that** the processor is further configured to:
update the prediction model according to a new model from a training host,
wherein the new model is trained according to the delay-tolerant data from the first base station.

4. The wireless communication apparatus of any of claims 1-3, **characterized in that** the wireless communication apparatus is disposed on a vehicle, and the mission critical data comprises communications-based train control, CBTC, signaling for the vehicle.

5. The wireless communication apparatus of claim 4, **characterized in that** the processor is configured to determine whether to control the transceiver set to switch to the second communication mode from the first communication mode according to the mission critical data further comprises:
determine whether the vehicle is static according to the mission critical data or a vehicle schedule; and
switch the transceiver set to the second communication mode from the first communication mode when the vehicle is static.

6. The wireless communication apparatus of claim 1, **characterized in that** a first signal quality measurement corresponding to the first base station and a second signal quality measurement corresponding to the second base station are greater than a threshold value in the third communication mode.

7. The wireless communication apparatus of claim 6, **characterized in that** the first signal quality measurement is greater than the threshold value and the second signal quality measurement is less than the threshold value in the first and second communication modes, and the delay-tolerant data comprises the first signal quality measurement and the second signal quality measurement.

8. A wireless communication method, comprising:
communicating with a first base station (310) through a first channel of a transceiver set of a wireless communication apparatus;
communicating with a second base station (320) through a second channel of the transceiver set;
operating in a first communication mode, by the transceiver set, to transmit and receive mission critical data with the first base station in the first communication mode;
collecting, by the transceiver set, data other than the mission critical data from the first base station;
operating in a second communication mode, by the transceiver set, to transmit delay-tolerant data with the first base station in the second communication mode, wherein the delay-tolerant data comprises the collected data;
determining, by a processor of the wireless communication apparatus, whether to switch to the second communication mode from the first communication mode when the mission critical data indicates that a task is completed;
transmitting and receiving, by the transceiver set, the mission critical data with the first base station and the delay-tolerant data with the second base station in a third communication mode; and **characterized by**
selectively controlling, by the processor, the transceiver to operate in one of the first communication mode, the second communication mode or the third communication mode according to a first signal quality measurement corresponding to the first base station and a second signal quality measurement corresponding to the second base station.

9. The wireless communication method of claim 8, **characterized by** further comprising:
determining whether to handover to a second base station using a prediction model according to the collected data; or
determining whether to communicate with the first base station through a second channel using the prediction model according to the collected data.

10. The wireless communication method of claim 9, **characterized by** further comprising:
updating the prediction model according to a new model from a training host,
wherein the new model is trained according to the delay-tolerant data from the first base station.

11. The wireless communication method of any of claims 8-10, **characterized in that** the mission critical data comprises communications-based train control, CBTC, signaling for a vehicle.

12. The wireless communication method of claim 11, **characterized in that** determining whether to switch to the second communication mode from the first communication mode according to the mission critical data further comprises:
determining whether the vehicle is static according to the mission critical data or a vehicle schedule; and
switching to the second communication mode from the first communication mode when the vehicle is static.

13. The wireless communication method of claim 12, **characterized in that** a first signal quality measurement corresponding to the first base station and a second signal quality measurement corresponding to the second base station are greater than a threshold value in the third communication mode, and the first signal quality measurement is greater than the threshold value and the second signal quality measurement is less than the threshold value in the first and second communication modes.
